Europäisches Patentamt

European Patent Office

Office européen des brevets

(11) Veröffentlichungsnummer: **0 287 694 A1**

## EUROPÄISCHE PATENTANMELDUNG

(21) Anmeldenummer: 87105894.7

(22) Anmeldetag: 18.04.87

(51) Int. Cl.4: **B09B 5/00 , B01D 11/02**

(43) Veröffentlichungstag der Anmeldung:
26.10.88 Patentblatt 88/43

(34) Benannte Vertragsstaaten:
AT BE CH FR GB LI NL SE

(71) Anmelder: **Chemisches Laboratorium Dr. Erwin Wessling**
Oststrasse 2
D-4417 Altenberge(DE)

(72) Erfinder: **Wessling, Erwin, Dr.**
Oststr. 2
D-4417 Altenberge(DE)

(74) Vertreter: **Patentanwälte Schulze Horn und Hoffmeister**
Goldstrasse 36
D-4400 Münster(DE)

(54) Verfahren zur Reinigung von mit Schadstoffen verunreinigten Böden.

(57) Die Erfindung betrifft ein Verfahren zur Reinigung von mit Schadstoffen verunreinigten Böden, bei dem der zu reinigende Boden an der Schadensstelle entnommen, einer Reinigung unterzogen und von den Schadstoffen gereinigt wieder ausgebracht wird. Das erfindungsgemäße Verfahren ist dadurch gekennzeichnet, daß der Boden nach einer mechanischen Aufbereitung einer Gegenstromextraktion mit wenigstens einem die Schadstoffe lösenden Lösungsmittel unterzogen wird.
daß das Lösungsmittel in einem geschlossenen Kreislauf geführt wird, und
daß die Schadstoffe im Verlauf des Kreislaufes von dem Lösungsmittel getrennt werden.
Weiterhin betrifft die Erfindung eine Vorrichtung zur Durchführung des Verfahrens.

EP 0 287 694 A1

## Verfahren zur Reinigung von mit Schadstoffen verunreinigten Böden

Die Patentanmeldung betrifft ein Verfahren zur Reinigung von mit Schadstoffen verunreinigten Böden, bei dem der zu reinigende Boden an der Schadensstelle entnommen, einer Reinigung unterzogen und von den Schadstoffen gereinigt wieder ausgebracht wird, sowie eine Vorrichtung zur Durchführung des Verfahrens.

Derartige Verfahren spielen eine zunehmend wichtige Rolle insbesondere auf dem Gebiet der sogenannten "Altlastenbeseitigung", d. h. bei der Wiederverwendbarmachung alter Mulldeponieflächen und ehemals industriell genutzter Flächen. Auf diesen ist häufig der Boden in einem solchen Ausmaß verunreinigt, daß eine unmittelbare Nutzung, z. B. als Baugrund, nicht möglich ist, weil erhebliche Gesundheitsrisiken für Menschen bestehen.

Eine bisher häufig verwendete Methode zur Altlastenbeseitigung besteht in einer einfachen Umsetzung der verunreinigten Bodenmassen auf eine Sondermülldeponie. Nachteilig und problematisch ist hierbei, daß Deponievolumen zunehmend knapper wird, daß die Kosten für eine Deponierung ständig steigen und daß dies keine Beseitigung, sondern lediglich eine Verlagerung des Problems darstellt. Hinzu kommt als weiterer Nachteil, daß in der Regel der deponierte Boden lediglich einen Schadstoffge halt zwischen etwa l - l0 Vol.-% oder sogar weniger aufweist, so daß weit über 90 % des Deponievolumens als fehlverwendet anzusehen sind.

Ein anderes bekanntes Verfahren ist die Behandlung von verunreinigtem Boden in Verbrennungsöfen, in welchen durch sehr hohe Temperaturen die chemischen Verbindungen der Schadstoffe, meist Kohlenwasserstoffe, in harmlose Verbindungen, im Idealfall Kohlendioxid und Wasser, umgesetzt werden. Bei diesem Verfahren kann zwar der Boden nach der Behandlung wieder ausgebracht werden, doch weist das Verfahren den Nachteil eines enormen Energiebedarfs und damit extrem hoher Kosten auf. Weiterhin ist nachteilig, daß der Boden nach der Behandlung völlig frei von organischer Masse und damit biologisch tot ist. Deshalb ist vor der Wiederausbringung der behandelte Boden mit nicht behandeltem und nicht verunreinigtem Boden zu mischen, was den Aufwand und die Kosten weiter erhöht.

Es stellt sich daher die Aufgabe, ein Verfahren der eingangs genannten Art anzugeben, das die aufgeführten Nachteile vermeidet, und das wirksam, kostengünstig und umweltfreundlich ist, das einen geringen Energiebedarf hat und das nur sehr wenig oder kein Deponievolumen benötigt. Weiterhin soll eine Vorrichtung zur Durchführung des Verfahrens angegeben werden.

Die Lösung dieser Aufgabe, betreffend das Verfahren, gelingt erfindungsgemäß durch ein Verfahren der eingangs genannten Art, in welchem der Boden nach einer mechanischen Aufbereitung einer Gegenstromextraktion mit wenigstens einem die Schadstoffe lösenden Lösungsmittel unterzogen wird, das Lösungsmittel in einem geschlossenen Kreislauf geführt wird, und die Schadstoffe im Verlauf des Kreislaufes von dem Lö sungsmittel getrennt werden.

Gegenüber dem Stand der Technik besitzt das Verfahren eine Reihe von wesentlichen Vorteilen. So werden durch die Gegenstromextraktion mit einem Lösungsmittel die Schadstoffe aus dem Boden herausgelöst, genauer von der Oberfläche der den Boden bildenden Bodenpartikel abgelöst. Durch die Führung des Bodens und des Lösungsmittels im Gegenstrom ist die Extraktion sehr effektiv. Je nach dem oder den zu entfernenden Schadstoffen kann das bestgeeignete Lösungsmittel zum Einsatz kommen. Die Schadstoffe werden durch die Extraktion aus dem Boden und die Trennung von dem Lösungsmittel als sehr hoch konzentrierter Extrakt gewonnen. Dieser Schadstoffextrakt bzw. dieses Schadstoffkonzentrat weist ein Volumen von lediglich etwa l - l0 % der dem Verfahren zugeführten verunreinigten Bodenmassen auf. Dieses Konzentrat kann anschließend bei hoher Temperatur verbrannt oder gesichert deponiert werden. Die Kosten hierfür sind gegenüber einer entsprechenden Behandlung der gesamten verunreinigten Bodenmasse drastisch geringer, da lediglich etwa l/l00 bis l/l0 der ursprünglichen Masse anfällt. Die Nutzungsdauer von Deponien kann aufgrund des geringen Volumens, das zu deponieren ist, erheblich gestreckt werden.

Ein weiterer wesentlicher Vorteil des Verfahrens ist die Führung des Lösungsmittels im Kreislauf, denn hierdurch kann das Lösungsmittel im Prinzip beliebig lange immer wieder verwendet werden. Die Umwelt wird durch das Lösungsmittel nicht belastet, da es, abgesehen von in der Praxis zu erwartenden geringen Verlusten, innerhalb des Kreislaufes verbleibt. Der Lösungsmitteleinsatz und die damit verbundenen Kosten bleiben damit relativ gering.

Zur Sicherstellung einer wirksamen Extraktion von Schadstoffen aus der zu reinigenden Bodenmasse ist vorgese hen, daß die Gegenstromextraktion in einem mit Mitteln zur Förderung des Bodens versehenen Extraktor erfolgt, in welchen das Lösungsmittel von einem Ende und der Boden vom anderen Ende her eingeführt und am jeweils entgegengesetzten Ende ausgeführt werden. Hierdurch wird erreicht, daß das Lösungsmittel nicht nur durch eine in sich ruhende Bodenmasse strömt oder sickert, sondern daß eine intensive gegenseitige Durchmischung von Lösungsmittel und Boden unter gleichzeitiger Förderung des letzteren stattfindet. Die Schadstoffextraktion wird so wirkungsvoll mechanisch unterstützt.

Um einen möglichst wirtschaftlichen, flüssigen Verfahrensablauf und zugleich ein gleichbleibend hohes Qualitätsniveau des Verfahrens zu erreichen, wird der Boden vorteilhaft kontinuierlich oder quasi kontinuierlich weitestgehend lösungsmitteldicht in den Extraktor eingeschleust und nach dessen Durchlaufen ausgeschleust . Bei entsprechender Ausgestaltung der Ein-und Ausschleusung des Bodens wird verhindert, daß Lösungsmittel aus dem Extraktor austreten kann, so daß eine Umweltgefährdung ausgeschlossen ist.

Eine bevorzugte Möglichkeit der Trennung von Schadstoffen und Lösungsmittel nach deren Ausführung aus dem Extraktor besteht darin, daß das mit den Schadstoffen befrachtete Lösungsmittel zum Verdampfen gebracht wird, daß das hierdurch erzeugte Schadstoffkonzentrat getrennt vom Lösungsmitteldampf abgezogen wird und daß das Lösungsmittel nach dem Verdampfen und dem Abzug der Schadstoffe wieder verflüssigt wird. Dies stellt eine sowohl technisch relativ einfach realisierbare als auch chemisch hochwirksame Trennungsmethode dar, bei der lediglich sichergestellt sein muß, daß das Lösungsmittel bei niedrigeren Temperaturen verdampft als die darin gelösten Schadstoffe. Diese Voraussetzung stellt in der Praxis aber keine Enschränkung der Anwendbarkeit des Verfahrens dar, da die Verunreinigungen von Böden im allgemeinen schon seit längerer Zeit bestehen und deshalb keine leichtflüchtigen Bestandteile mehr enthalten. Somit wird das im Kreislauf geführte Lösungsmittel weitestgehend rein wieder dem Einlaß in den Extraktor zugeführt.

Da der Boden nach dem Ausschleusen aus dem Extraktor noch mit Lösungsmittelresten behaftet sein kann, ist zur Rückgewinnung dieser Reste und zur Befreiung des Bodens von diesen Resten vorgesehen, daß der Boden nach dem Ausschleusen aus dem Extraktor einer mechanischen Behandlung zur Abtrennung von Resten des Lösungsmittels unterzogen wird und daß das Lösungsmittel in den Lösungsmittelkreislauf rückgespeist wird.

Eine alternative oder ergänzende Behandlung des Bodens mit der gleichen Zielsetzung besteht darin, daß der Boden nach dem Ausschleusen aus dem Extraktor oder nach der mechanischen Behandlung einer Erwärmung zur Verdampfung von Resten des Lösungsmittels unterzogen wird und daß der Lösungsmitteldampf nach Abführung wieder verflussigt und in den Lösungsmittelkreislauf rückgespeist wird. Durch eine dieser beiden Behandlungen und erst recht durch eine kombinierte Behandlung des Bodens nach dessen Ausschleusen aus dem Extraktor wird sichergestellt, daß die mit dem Boden ausgeschleusten Lösungsmittelreste vollständig für den Lösungsmittelkreislauf zurückgewonnen werden und daß der Boden nach der Reinigungsprozedur keinerlei möglicherweise schädliche oder gefährliche Lösungsmittelreste mehr enthält.

Auch das nach seiner Abtrennung von dem Lösungsmittel abgezogene Schadstoffkonzentrat kann im Rahmen des Verfahrens einer weiteren Behandlung unterzogen werden, bevor es deponiert, verbrannt oder sonst wie verwendet wird. Diese Behandlung besteht darin, daß das Schad stoffkonzentrat nach dem Abzug einer Erwärmung zur Verdampfung von Resten des Lösungsmittels unterzogen wird und daß der Lösungsmitteldampf nach Abführung wieder verflüssigt und in den Lösungsmittelkreislauf rückgespeist wird. Dadurch wird auch hier der Lösungsmittelverlust minimiert und es wird ein sehr hoch angereichertes Schadstoffkonzentrat durch das Verfahren erzeugt, das weitestgehend frei von Lösungsmittel-und Bodenresten ist.

Bevorzugte Lösungsmittel sind n-Pentan und Petroläther, insbesondere für die Reinigung von Böden, die mit aliphatischen, aromatischen und/oder halogenierten Kohlenwasserstoffen verunreinigt sind, die die Hauptgruppe der in der Praxis vorkommenden Fälle darstellen. Beide Lösungsmittel weisen sehr niedrige Siedepunkte auf. So liegt der Siedepunkt von n-Pentan bei 36 - 38° C und der von Petroläther bei knapp 50° C. Die Siedetemperaturen liegen damit noch über den hierzulande auftretenden Lufttemperaturen, erfordern aber nur die Zufuhr geringer Wärmeenergiemengen, um zu verdampfen. Damit wird mit dem erfindungsgemäßen Verfahren eine sehr gunstige Energiebilanz erreicht, denn es werden nur geringe Wärmeenergiemengen benötigt und die Wärmeverluste bleiben somit gering.

Da die genannten und ähnliche Lösungsmittel, genauer deren Dämpfe, mit Luft explosive Gemische bilden können, ist vorgesehen, daß innerhalb des Lösungsmittelkreislaufes des Verfahrens das Lösungsmittel unter Luftabschluß geführt wird. Somit kann es erst gar nicht zur Bildung explosionsfähiger Gemische kommen. Zu diesem Zweck sind geeignete Vorrichtungen insbesondere zur Ein-und Ausschleusung des Bodens in die die einzelnen Verfahrensschritte ausführenden Vorrichtungsteile bzw. eine gasdichte Ausgestaltung und Verbindung dieser Vorrichtungsteile untereinander vorzusehen.

Um den Extraktor von mechanischer Arbeit zu entlasten und um eine möglichst intensive und erschöpfende Extraktion von Schadstoffen zu gewährleisten, ist vorgesehen, daß der Boden vor dem Einschleusen in den Extraktor einer mechanischen Zerkleinerung und Auflockerung unterzogen wird. Hierdurch wird eine große Angriffsfläche für das Lösungsmittel geschaffen, dessen Aufgabe es ja ist, die an der Oberfläche der Bodenpartikel haftenden Schadstoffe von dort abzulösen. Je besser die Zerkleinerung und Auflockerung des Bodens ist, desto leichter gelangt das Lösungsmittel zu sämtlichen Schadstoffanlagerungen.

Die Lösung des zweiten Teils der Aufgabenstellung, nämlich die Schaffung einer Vorrichtung zur Durchführung des Verfahrens, gelingt durch eine Vorrichtung, die gekennzeichnet ist durch einen geschlossenen Extraktor mit einer Einführungsschleuse und einer Ausführungsschleuse für den Boden und mit einem Einlaß und einem Auslaß für das Lösungsmittel an jeweils entgegengesetzt einander gegenüberliegenden Enden, wobei Auslaß und Einlaß außerhalb des Extraktors miteinander verbunden sind und wobei zwischen diesen eine Trennvorrichtung zur Abtrennung der Schadstoffe aus dem Lösungsmittel angeordnet ist. Dadurch, daß der Extraktor geschlossen ausgeführt und mit Schleusen für die Zu-und Ausführung des Bodens versehen ist, können beliebige Lösungsmittel ohne Umweltgefährdung verwendet werden. Durch die außerhalb des Extraktors bestehende Verbindung von Lösungsmittelauslaß und -einlaß sowie durch die im Verlauf der Verbindung angeordnete Trennvorrichtung zur Trennung von Schadstoffen und Lösungsmittel wird die. Kreislaufführung des Lösungsmittels realisiert.

Die Trennung von Lösungsmittel und Schadstoffen erfolgt vorzugsweise durch einen mit dem Lösungsmittelauslaß des Extraktors verbundenen Lösungsmittelverdampfer mit einem Abzug für das dort erzeugte Schadstoffkonzentrat und mit einer Abführung für den Lösungsmitteldampf. Diesem nachgeschaltet ist zweckmäßig ein mit der Lösungsmitteldampf-Abführung des Lösungsmittelverdampfers verbundener Lösungsmittelverflüssiger, dessen Lösungsmittelabführung mit dem Lösungsmitteleinlaß des Extraktors verbunden ist. Weiterhin ist - ebenfalls der Trennvorrichtung nachgeschaltet - eine mit dem Auslaß der Abzugsvorrichtung verbundene Nacherwärmungskammer für das Schadstoffkonzentrat mit einem mit dem Einlaß des Lösungsmittelverflüssigers verbundenen Auslaß für verdampfte Lösungsmittelreste vorgesehen. Die Verdampfung und Verflüssigung des Lösungsmittels erfolgt vorzugsweise durch Erhitzung bzw. Abkühlung.

Zur Behandlung des Bodens nach seiner Ausführung aus dem Extraktor dient vorzugsweise eine dem Extraktor nachgeordnete, durch eine lösungsmitteldichte Bodenausführungsschleuse abgeschlossene Bodennachbehandlungsstation zur mechanischen Abtrennung von Lösungsmittelresten und/oder zur Erwärmung des Bodens mit Rückführungen für das Lösungsmittel und/oder für verdampfte Lösungsmittelreste in den Lösungsmittelkreislauf. Eine lösungsmitteldichte Ausführungsschleuse unmittelbar am Extraktor wird bei entsprechend dichter Ausführung der einzelnen Teile entbehrlich. Stattdessen ist diese Schleuse vorteilhaft an einer Stelle angeordnet, an der der Boden endgültig bearbeitet und bereits völlig lösungsmittelfrei ist.

Die Vorbereitung des Bodens vor seiner Einführung in den Extraktor übernimmt eine vor der Einführungsschleuse des Extraktors angeordnete, den zu reinigenden Boden durch mechanische Bearbeitung lockernde und zerkleinernde Bodenvorbereitungsstation.

Als besonders vorteilhaft, weil flexibel einsetzbar, ist eine Ausführung vorgesehen, bei der die Vorrichtung aus mehreren separaten, zu einem Einsatzort transportablen, miteinander verbindbaren Komponenten besteht.

Im folgenden soll das erfindungsgemäße Verfahren zur Reinigung mit Schadstoffen verunreinigten Böden anhand eines in einer Zeichnung in Form eines Blockdiagramms dargestellten, bevorzugten Verfahrensablaufes zusammenhängend erläutert werden.

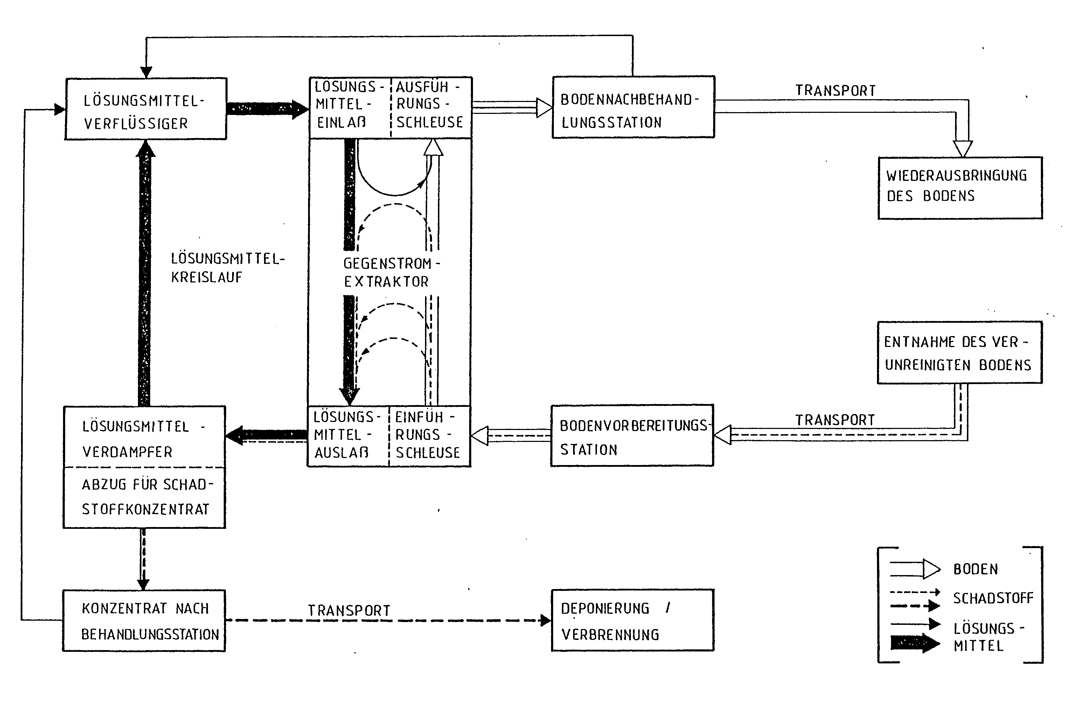

Wie aus der einzigen Figur der Zeichnung ersichtlich ist, beginnt die Behandlung des verunreinigten Bodens mit seiner Entnahme an der Schadensstelle. Von dort wird der verunreinigte Boden zu einer Bodenvorbereitungsstation transportiert, in welcher der Boden einer mechanischen Zerkleinerung und Auflockerung unterworfen wird. Von der Bodenvorbereitungsstation gelangt der Boden durch eine Einführungsschleuse in einen Gegenstromextraktor. Der Boden wird durch diesen hindurch vom Einführungsende zu einer gegenüberliegenden Ausführungsschleuse gefördert. Durch den Extraktor wird im Gegenstrom zum Boden ein Lösungsmittel geführt, das über einen Lösungsmitteleinlaß an dem der Einführungsschleuse für den Boden gegenüberliegenden Ende des Extraktors in diesen eingeleitet wird. Durch einen der Einlaßseite des Lösungsmittels gegenüberliegenden Lösungsmittelauslaß verläßt das Lösungsmittel den Extraktor. Während der Boden und das Lösungsmittel im Gegenstrom zueinander durch den Extraktor wandern, erfolgt eine Lösung der im Boden enthaltenen Schadstoffe durch das Lösungsmittel. Außerdem gelangt ein kleiner Teil des Lösungsmittels mit dem von den Schadstoffen gereinigten Bodenteilchen zur Ausführungsschleuse für den Boden. An dem einen Ende des Extraktors wird somit der mit einem geringen Lösungsmittelanteil angereicherte Boden ausgeschleust, während am anderen Ende des Extraktors das mit den gelösten Schadstoffen befrachtete Lösungsmittel austritt.

Von der Ausführungsschleuse gelangt der Boden, der noch Lösungsmittelreste enthält, zu einer Bodennachbehandlungsstation. In dieser werden die Lösungsmittelreste durch mechanische und/oder thermische Behandlung von dem Boden getrennt. Der Boden, der nun sowohl frei von Lösungsmittelresten als auch von Schadstoffen ist, wird anschließend entweder zur Wiederausbringung an die Schadensstelle oder zu einer anderweitigen Verwendung transportiert.

Das aus dem Extraktor kommende, mit den Schadstoffen angereicherte Lösungsmittel wird einem Lösungsmittelverdampfer zugeführt. Bei Verwendung entsprechend niedrig siedender Lösungsmittel verdampft in dem Lösungsmittelverdampfer lediglich das Lösungsmittel, während sich die Schadstoffe als Schadstoffkonzentrat anreichern. Das verdampfte Lösungsmittel wird anschließend einem Lösungsmittelverflüssiger zugeführt, in welchem eine Rückkondensation des Lösungsmittels erfolgt. Das nun wieder flüssige Lösungsmittel wird dem Lösungsmitteleinlaß des Extraktors zugeführt. Damit ist ein geschlossener Lösungsmittelkreislauf hergestellt.

Das sich in dem Lösungsmittelverdampfer ansammelnde Schadstoffkonzentrat wird über einen Abzug aus diesem entnommen und gelangt zusammen mit darin noch enthaltenen Lösungsmittelresten zu einer Konzentrat-Nachbehandlungsstation. In dieser wird, vorzugsweise durch Erwärmung, das in dem Schadstoffkonzentrat noch enthaltene Lösungsmittel zum Verdampfen gebracht, bis das Schadstoffkonzentrat vollständig ode zumindest weitestgehend lösungsmittelfrei ist. Das Schadstoffkonzentrat wird dann entweder zur Deponierung oder zur Verbrennung abtransportiert.

Um Lösungsmittelverluste zu vermeiden und um die Umwelt nicht mit Lösungsmitteldämpfen zu belasten, wird sowohl der aus der Bodennachbehandlungsstation als auch der aus der Konzentrat-Nachbehandlungsstation kommende Lösungsmitteldampf dem bereits erwähnten Lösungsmittelverflüssiger zugeführt und damit an den Lösungsmittelkreislauf zurückgegeben.

1. Beispiel:

Reinigung von mit polychlorierten Biphenylen verunreinigtem Boden:

Boden aus einem aufgelassenen Firmengelände einer ehemaligen Kokerei, der unter anderem aus granulärem Bauschuttabfall bestand, wies eine Konzentration von 570 mg polychlorierten Biphenylen pro kg Boden auf. In einem ersten Reinigungsschritt wurde ein Bodenprodukt mit einer PCB-Konzentration von 4 mg/kg Boden erzielt. Wurde dieser vorgereinigte Boden einem zweiten Reinigungsschritt unterzogen, wurde der Boden bis auf einen Restgehalt von 0,1 mg PCB pro kg Boden gereinigt. Dieser Wert liegt an der Grenze der meßtechnischen Nachweisbarkeit. Eine derartige Aufbereitung ergibt Böden, die deutlich unter den bisherigen Grenzwerten von 1 mg PCB pro kg Boden-Gewicht liegen und die bisher erzielt wurden. Durch dieses Verfahren lassen sich selbst Böden, die im großen Umfang mit polychlorierten Biphenylen verseucht sind, bis auf Konzentrationen an polychlorierten Biphenylen reinigen, die eine unbedenklichen Weiterverwertung des Bodens ermöglicht.

2. Beispiel:

Reinigung von mit Naphthalin verseuchtem Boden:

Trockener und körnig vorliegender Boden aus einem aufgelassenen Zechegelände mit einem Naphthalingehalt von 430 mg Naphthalin pro kg Boden wurde in einem einstufigen Verfahren aufgearbeitet. Nach Abschluß der Reinigung wies der Boden eine Konzentration von 0,6 mg Naphthalin pro kg Boden auf. Ein derart ge reinigter Boden kann problemlos auch in Bereichen, mit denen der Mensch in Kontakt kommt, verwandt werden.

3. Beispiel:

Reinigung von mit Benzo(a)pyren verunreinigtem Boden:

In einem zweistufigen Verfahren wurde Boden, der von einer alten Koksverladungsanlage abgetragen worden war, aufgearbeitet. Er besaß eine Konzentration von 135 mg Benzo(a)pyren pro kg Boden-Gewicht. Der Boden lag zu Beginn des Verfahrens granulär und trocken vor. Nach der ersten Stufe wies der gereinigte Boden einen Gehalt von 4,5 mg Benzo(a)pyren pro kg Boden auf. Im Anschluß an die zweite Reinigung lag der erzielte Wert bei 0,35 mg Benzo(a)pyren pro kg Boden.

4. Beispiel:

Reinigung von mit Hexachlorcyclohexan verunreinigtem Boden:

Von einer Stelle einer Müllkippe wurde ein Bodenareal abgetragen, in dem ein durchschnittlicher Wert von 960 mg Hexachlorcychlohexan (Lindan) pro kg Boden vorlag. Bei diesem Hexachlorcychlohexan handelt es sich um drei Isomere, die bei dieser Verbindung auftreten. Nach einer Reinigung wurde ein Gehalt von 2 mg Hexachlorcychlohexan pro kg Boden festgestellt.

5. Beispiel:

Reinigung von mit Chlorpestiziden verunreinigtem Boden:

Boden von einem ehemaligen Lagerhausgelände wurde einem erfindungsgemäßen Reinigungsprozeß unterzogen. Der Boden hatte eine Konzentration von 730 mg Chlorpestizid pro kg Boden. Nach dem vollzogenen Reinigungsprozeß lag ein Wert von 1,2 mg Chlorpestizid pro kg Boden vor.

**Ansprüche**

1. Verfahren zur Reinigung von mit Schadstoffen verunreinigten Böden, bei dem der zu reinigende Boden an der Schadensstelle entnommen, einer Reinigung unterzogen und von den Schadstoffen gereinigt wieder ausgebracht wird, dadurch gekennzeichnet, daß der Boden nach einer mechanischen Aufbereitung einer Gegenstromextraktion mit wenigstens einem die Schadstoffe lösenden Lösungsmittel unterzogen wird, daß das Lösungsmittel in einem geschlossenen Kreislauf geführt wird, und daß die Schadstoffe im Verlauf des Kreislaufes von dem Lösungsmittel getrennt werden.

2. Verfahren nach Anspruch 1, dadurch gekennzeichnet, daß die Gegenstromextraktion in einem mit Mitteln zur Förderung des Bodens versehenen Extraktor erfolgt, in welchen das Lösungsmittel von einem Ende und der Boden vom anderen Ende her eingeführt und am jeweils entgegengesetzten Ende ausgeführt werden.

3. Verfahren nach den Ansprüchen 1 und 2, dadurch gekennzeichnet, daß der Boden kontinuierlich oder quasi kontinuierlich weitestgehend lösungsmitteldicht in den Extraktor eingeschleust und nach dessen Durchlaufen ausgeschleust wird.

4. Verfahren nach den Ansprüchen 1 bis 3, dadurch gekennzeichnet, daß das mit den Schadstoffen befrachtete Lösungsmittel nach dem Ausführen aus dem Extraktor zum Verdampfen gebracht wird, daß das hierdurch erzeugte Schadstoffkonzentrat getrennt vom Lösungsmitteldampf abgezogen wird und daß das Lösungsmittel nach dem Verdampfen und dem Abzug der Schadstoffe wieder verflüssigt wird.

5. Verfahren nach den Ansprüchen I bis 4, dadurch gekennzeichnet, daß der Boden nach dem Ausschleusen aus dem Extraktor einer mechanischen Behandlung zur Abtrennung von Resten des Lösungsmittels unterzogen wird und daß das Lösungsmittel in den Lösungsmittelkreislauf ruckgespeist wird.

6. Verfahren nach den Ansprüchen I bis 5, dadurch gekennzeichnet, daß der Boden nach dem Ausschleusen aus dem Extraktor oder nach der mechanischen Behandlung einer Erwärmung zur Verdampfung von Resten des Lösungsmittels unterzogen wird und daß der Lösungsmitteldampf nach Abführung wieder verflüssigt und in den Lösungsmittelkreislauf rückgespeist wird.

7. Verfahren nach den Ansprüchen I bis 6, dadurch gekennzeichnet, daß das Schadstoffkonzentrat nach dem Abzug einer Erwärmung zur Verdampfung von Resten des Lösungsmittels unterzogen wird und daß der Lösungsmitteldampf nach Abführung wieder verflüssigt und in den Lösungsmittelkreislauf rückgespeist wird.

8. Verfahren nach den Ansprüchen I bis 7, dadurch gekennzeichnet, daß das Lösungsmittel n-Pentan oder Petroläther ist.

9. Verfahren nach den Ansprüchen I bis 8, dadurch gekennzeichnet, daß das Lösungsmittel unter Luftabschluß geführt wird.

10. Verfahren nach den Ansprüchen I bis 9, dadurch gekennzeichnet, daß der Boden vor dem Einschleusen in den Extraktor einer mechanischen Zerkleinerung und Auflockerung unterzogen wird.

11. Vorrichtung zur Durchführung des Verfahrens nach den Ansprüchen I bis 10, gekennzeichnet durch einen geschlossenen Extraktor mit einer Einführungsschleuse und eir.3r Ausführungsschleuse für den Boden und mit einem Einlaß und einem Auslaß für das Lösungsmittel an jeweils entgegengesetzt einander gegenüberliegenden Enden, wobei Auslaß und Einlaß außerhalb des Extraktors miteinander verbunden sind und wobei zwischen diesen eine Trennvorrichtung zur Abtrennung der Schadstoffe aus dem Lösungsmittel angeordnet ist.

12. Vorrichtung nach Anspruch 11, gekennzeichnet durch einen mit dem Lösungsmittelauslaß des Extraktors verbundenen Lösungsmittelverdampfer mit einem Abzug für das dort erzeugte Schadstoffkonzentrat und mit einer Abführung für den Lösungsmitteldampf.

13. Vorrichtung nach den Ansprüchen 11 und 12, gekennzeichnet durch einen mit der LösungsmitteldampfAbführung des Lösungsmittelverdampfers verbundenen Lösungsmittelverflüssiger, dessen Lösungsmittelabführung mit dem Lösungsmitteleinlaß des Extraktors verbunden ist.

14. Vorrichtung nach den Ansprüchen 11 bis 13, gekennzeichnet durch eine mit dem Auslaß der Abzugsvorrichtung verbundenen Nacherwärmungskammer für das Schadstoffkonzentrat mit einem mit dem Einlaß des Lösungsmittelverflüssigers verbundenen Auslaß für verdampfte Lösungsmittelreste.

15. Vorrichtung nach den Ansprüchen 11 bis 14, gekennzeichnet durch eine dem Extraktor nachgeordnete, durch eine lösungsmitteldichte Bodenausführungsschleuse abgeschlossene Bodennachbehandlungsstation zur mechanischen Abtrennung von Lösungsmittelresten und/oder zur Erwärmung des Bodens, mit Rückführungen für das Lösungsmittel und/oder für verdampfte Lösungsmittelreste in den Lösungsmittelkreislauf.

16. Vorrichtung nach den Ansprüchen 11 bis 15, gekennzeichnet durch eine vor der Einführungsschleuse des Extraktors angeordnete, den zu reinigenden Boden durch mechanische Bearbeitung lockernde und zerkleinernde Bodenvorbereitungsstation.

17. Vorrichtung nach den Ansprüchen 11 bis 16, dadurch gekennzeichnet, daß die Vorrichtung aus mehreren separaten, zu einem Einsatzort transportablen, miteinander verbindbaren Komponenten besteht.

BODEN
SCHADSTOFF
LÖSUNGSMITTEL

WIEDERAUSBRINGUNG DES BODENS

ENTNAHME DES VERUNREINIGTEN BODENS

TRANSPORT

TRANSPORT

BODENNACHBEHANDLUNGSSTATION

BODENVORBEREITUNGSSTATION

DEPONIERUNG / VERBRENNUNG

LÖSUNGSMITTEL-EINLAß

AUSFÜHRUNGS-SCHLEUSE

GEGENSTROMEXTRAKTOR

EINFÜHRUNGS-SCHLEUSE

LÖSUNGSMITTEL-AUSLAß

TRANSPORT

LÖSUNGSMITTEL-VERFLÜSSIGER

LÖSUNGSMITTEL-KREISLAUF

LÖSUNGSMITTEL-VERDAMPFER

ABZUG FÜR SCHADSTOFFKONZENTRAT

KONZENTRAT NACH BEHANDLUNGSSTATION

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 606 774 (E. MORRIS)<br><br>* Insgesamt * | 1-4,7,<br>9,11-<br>14,17 | B 09 B 5/00<br>B 01 D 11/02 |
| Y | | 8,10,<br>16 | |
| A | | 6,15 | |
| | --- | | |
| Y | US-A-4 189 376 (S. MITCHELL)<br>* Spalte 1, Zeilen 12-24; Spalte 6, Zeile 58 - Spalte 7, Zeile 18 * | 8 | |
| | --- | | |
| X | PT/CIVIELE TECHNIEK, Band 40, Nr. 9, September 1985, Seiten 24-29, Rijswijk, NL; W. VAN GEMERT et al.: "Reinigingsinstallatie voor vervuilde grond" * Seite 27, linke Spalte, Zeilen 26-46; Seite 28, rechte Spalte, Zeilen 9-66; Figuren 3,4 * | 1,2 | **RECHERCHIERTE SACHGEBIETE (Int. Cl.4)**<br><br>B 09 B<br>B 01 D |
| Y | Idem | 10,16 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 02-09-1987 | LAVAL J.C.A |